# EUROPÄISCHE PATENTSCHRIFT

(11) **EP 0 959 050 B1**
(45) Veröffentlichungstag und Bekanntmachung des Hinweises auf die Patenterteilung: **10.03.2004**
(21) Anmeldenummer: 99105205.1
(22) Anmeldetag: 12.03.1999
(51) Int. Cl.: C03C 13/00, C03C 13/06

(54) **Mineralfasern**
Mineral fibres
Fibres minérales

(30) Priorität: 16.05.1998 DE 29808918 U; 05.09.1998 DE 19840497
(43) Veröffentlichungstag der Anmeldung: 24.11.1999
(73) Patentinhaber: Heraklith AG, 9586 Fürnitz (AT)
(72) Erfinder: Preininger, Reinhard Dr., 9580 Villach-Drobollach (AT)
(74) Vertreter: Becker, Thomas, Dr., Dipl.-Ing.

(56) Entgegenhaltungen:
- WO-A-97/22563
- WO-A-97/30002
- WO-A-98/15503
- DE-U- 29 515 168
- KNUDSEN T: "NEW TYPE OF STONEWOOD (HT FIBRES) WITH A HIGH DISSOLUTION RATE AT PH = 4.5" GLASS SCIENCE AND TECHNOLOGY (GLASTECHNISCHE BERICHTE), Bd. 69, Nr. 10, 1. Oktober 1996 (1996-10-01), Seiten 331-337, XP000628590 ISSN: 0017-1085

## Beschreibung

Die Erfindung betrifft Mineralfasern, wie sie beispielsweise in Vliesen, Matten oder Platten im Bauwesen, insbesondere zur Wärmedämmung, Anwendung finden.

Ausgehend von der carcinogenen Wirkung von Asbestfasern ist in der Vergangenheit mehrfach diskutiert worden, inwieweit auch die vorstehend genannten Mineralfasern ein Gesundheitsrisiko darstellen. Einen wissenschaftlichen Beweis dafür gibt es bisher nicht. Gleichwohl ist es das ständige Bestreben, Mineralfasern bereitzustellen, die eine hohe Auflösungsgeschwindigkeit und eine möglichst geringe Halbwertzeit besitzen.

Zu diesem Zweck sind verschiedene Vorschläge für Mineralfaser-Zusammensetzungen gemacht worden.

In der EP 0 558 548 B1 wird eine Mineralfaser-Zusammensetzung vorgeschlagen, die aus 45 bis 65 Gew.-% SiO₂ sowie 15 bis 40 Gew.-% CaO besteht und darüber hinaus einen Gehalt an Phosphorpentoxid aufweist. Insbesondere der Gehalt an Phosphoroxid wird als wesentlich für die Biolöslichkeit angesehen. Außerdem wird darauf hingewiesen, daß der Faserdurchmesser möglichst gering sein soll und insbesondere kleiner 3 µm.

Die Mineralfasern nach den im wesentlichen inhaltsgleichen DE 295 15 168 U1, W096/14274, W096/14454, EP 0 792 843 A2, EP 0 792 844 A2 und EP 0 792 845 A2 sind aus einer Zusammensetzung hergestellt, die, in Oxidform ausgedrückt, 32 bis 48 Gew.-% SiO₂, 18 bis 30 Gew.-% Al₂O₃, 10 bis 30 Gew.-% CaO und 2 bis 20 Gew.-% MgO umfaßt. Die Viskosität entsprechender Zusammensetzungen bei 1.400°C ist mit 1.000 bis 7.000 mPas angegeben.

Dabei wird der Viskosität der Zusammensetzung eine wesentliche Bedeutung beigemessen. Außerdem soll der Gehalt an Aluminiumoxid begrenzt sein. Auf diese Weise soll der Einschluß von leicht zugänglichen Materialien mit einem mäßigen Aluminiumgehalt wie beispielsweise Stein, Sand und Abfall erlaubt sein.

Fasern der genannten Zusammensetzung sind seit Jahrzehnten bekannt (FR 902 563: SiO₂=35-60 Gew.-%, Al₂O₃=10-30 Gew.-%, CaO + MgO=8-52 Gew.-%). Ihre Auflösungsgeschwindigkeit ist jedoch begrenzt (gemäß DE 295 15 168 U1: bei pH 4,5:20 bis 80 nm/Tag).

Aus den eingangs genannten Gründen ist eine verbesserte Biolöslichkeit der Fasern als ständiges Ziel anzusehen, wobei in Deutschland ab 1. Oktober 2000 Halbwertzeiten gemäß einem in-vivo-Test der nachstehend näher beschriebenen Art von kleiner oder gleich 40 Tagen verlangt werden. Diese Werte erfüllen die vorgenannten Fasern nicht.

Gleichzeitig ist angestrebt, solche Mineralfasern zur Verfügung zu stellen, die aus konventionellen Rohstoffen wie Stein- und Sandmaterialien, beispielsweise Anorthosit, Gabros, Kalkstein, Dolomit und/oder Diabas oder Abfallmaterialien wie Mineralfaserabfällen, Aluminiumsilikaten, Schlacken, Gießereisanden, Filterstäuben, Flugaschen oder dergleichen hergestellt werden können und möglichst unter Beibehaltung der bekannten guten physikalischen Eigenschaften (zum Beispiel: Beständigkeit unter feuchten Bedingungen)..

Es wurde festgestellt, daß dieses Ziel durch eine Abstimmung der molaren Verhältnisse zwischen den Netzwerkbildern SiO₂ und Al₂O₃ und den Netzwerkwandlern CaO und MgO erreicht wird.

Wie sich aus dem einleitend genannten Stand der Technik ergibt ist man bisher davon ausgegangen, daß die Biolöslichkeit durch eine Vergrößerung der spezifischen Oberfläche bedingt ist und insoweit mit einer Verkleinerung der Faserdurchmesser korreliert beziehungsweise von der Viskosität der Oxidmischung bei erhöhten Temperaturen abhängt. Auf diese Weise werden jedoch die physikalischen Eigenschaften der aus den Mineralfasern gebildeten Baumaterialien verschlechtert und eine Biolöslichkeit allenfalls mit Halbwertszeiten deutlich über 40 Tage erreicht.

Demgegenüber schafft die Erfindung die Möglichkeit, relativ große Fasern, also Fasern mit relativ großem Durchmesser und relativ geringer spezifischer Oberfläche bereitzustellen, die hervorragende physikalische Eigenschaften aufweisen.

In ihrer allgemeinsten Ausführungsform betrifft die Erfindung Mineralfasern, hergestellt aus einer Zusammensetzung, die die Oxide SiO₂, Al₂O₃, CaO und MgO in einer Menge von mindestens 80 Massenprozent enthält, wobei das molare Verhältnis [SiO₂ + Al₂O₃] zu [CaO + MgO] zwischen 0,75 und 1,68 beträgt, nach verschiedenen Ausführungsform zwischen 0,96 und 1,47 beziehungsweise zwischen 1,02 und 1,27.

Umfangreiche Versuche haben gezeigt, daß die Berücksichtigung der Molverhältnisse der Netzwerkbildner zu den Netzwerkwandlern und in den genannten Grenzen zu charakteristisch verbesserten Auflösungswerten der Fasern im menschlichen Körper führt, und zwar im Vergleich zu Fasern mit einer oxidischen Zusammensetzung innerhalb der vorgenannten bekannten Bereichsgrenzen unter Berücksichtigung der genannten Viskositätswerte.

Eine weitere Steigerung der Biolöslichkeit läßt sich unter kumularem Einschluß weiterer Verhältniszahlen der Molgewichte einzelner Netzwerkbildner zu einzelnen Netzwerkwandlern erreichen, und zwar gemäß folgender Spezifikation:
- gemäß Anspruch 1:

   [SiO₂] zu [CaO + MgO] = 0,54 bis 1,23

   beziehungsweise 0,72 bis 1,10 (Anspruch 3)
   beziehungsweise 0,76 bis 0,93 (Anspruch 8)
- gemäß Anspruch 1:

   [Al₂O₃] zu [CaO + MgO] = 0,21 bis 0,45

   beziehungsweise 0,23 bis 0,37 (Anspruch 4)
   beziehungsweise 0,26 bis 0,32 (Anspruch 9)
- gemäß Anspruch 1:

   [SiO₂ + Al₂O₃] zu [CaO] = 1,23 bis 2,54

   beziehungsweise 1,59 bis 2,23 (Anspruch 5)
   beziehungsweise 1,66 bis 1,98 (Anspruch 10)
- gemäß Anspruch 1:

   [SiO₂ + Al₂O₃] zu [MgO] = 1,96 bis 4,94

   beziehungsweise 2,43 bis 4,35 (Anspruch 6)
   beziehungsweise 2,68 bis 3,52 (Anspruch 11).

Die Oxidanalyse in Massenprozent soll sich dabei innerhalb folgender Grenzen bewegen:

| | |
|---|---|
| SiO₂ | 28-40 |
| Al₂O₃ | 18-25 |
| CaO + MgO | 27-43 |

Weitere Oxide der Mineralfaserzusammensetzung sind (typische Massenanteile in Klammern angegeben):

| | |
|---|---|
| Na₂O/K₂O | 1 bis 5 |
| FeO/Fe₂O₃ | 1 bis 5 |
| TiO₂ | 1 bis 2. |

Daneben kann die Zusammenfassung SrO, B₂O₃, Cr₂O₃, MnO, ZrO₂ in Anteilen von typischerweise jeweils < 1,0 M.-% umfassen.

Diese spielen in Bezug auf die Löslichkeit der Faser jedoch keine oder allenfalls nur eine untergeordnete Rolle.

Wie ausgeführt besteht ein weiteres Charakteristikum der Mineralfasern in ihrer spezifischen Oberfläche, die nach einer Ausführungsform auf einen Wert < 0,25 m²/g beschränkt ist und auf Werte < 0,2 m²/g beschränkt werden kann.

Hinsichtlich der Faserdurchmesser ergeben sich daraus Werte (d₉₅) von deutlich über 3 µm. Nach einer Ausführungsform ist der d₉₅-Wert mit > 6 µm, nach einer weiteren Ausführungsform mit > 8 µm angegeben.

Nachstehend wird die Erfindung anhand verschiedener Ausführungsbeispiele näher erläutert.

Zur Anwendung kamen zwei Faserproben mit einem Gehalt der Oxide SiO₂, Al₂O₃, CaO und MgO von 94 (Probe A) bzw. 91 (Probe B) Masse-% und folgenden molaren Verhältniszahlen:

| **Verhältnis** | **Probe A** | **Probe B** |
|---|---|---|
| [SiO₂ + Al₂O₃] zu [Ca0 + MgO] | 1,03 | 1,07 |
| [SiO₂] zu [CaO + MgO] | 0,72 | 0,79 |
| [Al₂O₃] zu [CaO + MgO] | 0,30 | 0,27 |
| [SiO₂ + Al₂O₃] zu [CaO] | 1,63 | 1,73 |
| [SiO₂ + Al₂O₃] zu [MgO] | 2,79 | 2,78 |

Weitere Oxide wie Na₂O und K₂O, FeO (Fe₂O₃) waren in Mengen von insgesamt 5 (Probe A) beziehungsweise 7 (Probe B) Masse-%, sowie B₂O₃, Cr₂O₃, MnO und ZrO₂ in Anteilen von jeweils unter 1,0 M.-% enthalten und ergänzen die vorstehenden Analysen jeweils auf 100 M.-%.

Die geometrischen Daten der Faserproben können wie folgt angegeben werden:

| **Probe** | **Durchmesser d**_{**95**}**/µm** | **spezifische Oberfläche(m**^{**2**}**/g)** |
|---|---|---|
| A | 6 | 0,28 |
| B | 7,5 | 0,22 |

Die Proben A, B wurden einer in vitro-Untersuchung unterzogen, wie bei Sebastian et. al. "Corrosion of fibrous silicates in electrolyte solutions", Proc. XVI Intern. Congr. Glass 4 (1992), 93 bis 98 beschrieben.

Die Zusammensetzung der Lösung in mg/l betrug:

| **Komponente** | **ph 4,5-5** |
|---|---|
| MgCl₂6H₂O | 106 |
| NaCl | 3208 |
| CaCl₂4H₂O | 159 |
| Na₂SO₄1OH₂O | 90 |
| Na₂HPO₄ | 74 |
| (Na₂-tartrat) 2H₂O | 90 |
| (Na₃-citrat) 2H₂O | 5313 |
| Na-lactat | 88 |
| Glycin | 59 |
| Na-pyruvat | 86 |

Danach wurde die Auflösungsgeschwindigkeit der Faserproben A, B, berechnet aus dem SiO₂-basierten Massenverlust nach 60 Tagen beziehungsweise 50 % Massenverlust berechnet, wobei in der nachstehenden Tabelle jeweils der Mittelwert aus drei Proben angegeben ist:

| **Faserprobe** | **Auflösungsgeschwindigkeit (nm/d)** |
|---|---|
| A | 92 |
| B | 110 |

Die Proben wurden außerdem in einem in-vivo-Test nach intratrachealer Instillation untersucht und nach einem Korrelationsmodell (BIA-Report 2/98: Muhle et. al: Faser-Test zur Abschätzung der Biobeständigkeit und zum Verstaubungsverhalten, Hauptverband der gewerblichen Berufsgenossenschaften, Sankt Augustin, 1998) abgeschätzt.

Für die Faserprobe A konnte ein Wert T_{1/2}/Tage von 43 ± 5 und bei Probe B ein Wert von 37 ± 3 ermittelt werden.

## Patentansprüche

1. Mineralfasern hergestellt aus einer Zusammensetzung, die zu mehr als 80 M.-% die Oxide SiO₂, Al₂O₃, CaO und MgO umfaßt, mit folgenden molaren Verhältnissen:
a) [SiO₂ + Al₂O₃] zu [CaO + MgO] zwischen 0,75 und 1,68,
b) [SiO₂] zu [CaO + MgO] zwischen 0,54 und 1,23,
c) [Al₂O₃] zu [CaO + MgO] zwischen 0,21 und 0,45,
d) [SiO₂ + Al₂O₃] zu [CaO] zwischen 1,23 und 2,54 und
e) [SiO₂ + Al₂O₃] zu [MgO] zwischen 1,96 und 4,94.

2. Mineralfasern nach Anspruch 1, bei denen das molare Verhältnis [SiO₂] + Al₂O₃] zu [CaO + MgO] zwischen 0,96 und 1,47 beträgt.

3. Mineralfasern nach Anspruch 1, bei denen das molare Verhältnis [SiO₂] zu [CaO + MgO] zwischen 0,72 und 1,10 beträgt.

4. Mineralfasern nach Anspruch 1, bei denen das molare Verhältnis [Al₂O₃] zu [CaO + MgO] zwischen 0,23 und 0,37 beträgt.

5. Mineralfasern nach Anspruch 1, bei denen das molare Verhältnis [SiO₂ + Al₂O₃] zu [CaO] zwischen 1,59 und 2,23 beträgt.

6. Mineralfasern nach Anspruch 1, bei denen das molare Verhältnis [SiO₂ + Al₂O₃] zu [MgO] zwischen 2,43 und 4,35 beträgt.

7. Mineralfasern nach Anspruch 1, bei denen das molare Verhältnis [SiO₂ + Al₂O₃] zu [CaO + MgO] zwischen 1,02 und 1,27 beträgt.

8. Mineralfasern nach Anspruch 1, bei denen das molare Verhältnis [SiO₂] zu [CaO + MgO] zwischen 0,76 und 0,93 beträgt.

9. Mineralfasern nach Anspruch 1, bei denen das molare Verhältnis [Al₂O₃] zu [CaO + MgO] zwischen 0,26 und 0,32 beträgt.

10. Mineralfasern nach Anspruch 1, bei denen das molare Verhältnis [SiO₂ + Al₂O₃] zu [CaO] zwischen 1,66 und 1,98 beträgt.

11. Mineralfasern nach Anspruch 1, bei denen das molare Verhältnis [SiO₂ + Al₂O₃] zu [MgO] zwischen 2,68 und 3,52 beträgt.

12. Mineralfasern nach 1, deren Zusammensetzung
1 bis 5 M.-% Na₂O + K₂O,
1 bis 5 M.-% FeO + Fe₂O₃,
1 bis 2 M.-% TiO₂
umfaßt.

13. Mineralfasern nach Anspruch 1 mit einer spezifischen Oberfläche < 0,25 m²/g.

14. Mineralfasern nach Anspruch 1 mit einem mittleren Durchmesser d₉₅ > 6 µm.

15. Mineralfasern nach Anspruch 1 mit einem mittleren Durchmesser d₉₅ > 8 µm.

## Claims

1. Mineral fibres made from a composition consisting to an amount of more than 80 mole % of the oxides SiO₂, Al₂O₃, CaO and MgO in the following molar ratios:
a) [SiO₂ + Al₂O₃] to [CaO + MgO] of between 0.75 and 1.68,
b) [SiO₂] to [CaO + MgO] of between 0.54 and 1.23,
c) [Al₂O₃] to [CaO + MgO] of between 0.21 and 0.45,
d) [SiO₂ + Al₂O₃] to [CaO] of between 1.23 and 2.54 and
e) [SiO₂ + Al₂O₃] to [MgO] of between 1.96 and 4.94.

2. The mineral fibres according to claim 1, in which the molar ratio of [SiO₂ + Al₂O₃] to [CaO + MgO] is between 0.96 and 1.47.

3. The mineral fibres according to claim 1, in which the molar ratio of [SiO₂] to [CaO + MgO] is between 0.72 and 1.10.

4. The mineral fibres according to claim 1, in which the molar ratio of [Al₂O₃] to [CaO + MgO] is between 0.23 and 0.37.

5. The mineral fibres according to claim 1, in which the molar ratio of [SiO₂ + Al₂O₃] to [CaO] is between 1.59 and 2.23.

6. The mineral fibres according to claim 1, in which the molar ratio of [SiO₂ + Al₂O₃] to [MgO] is between 2.43 and 4.35.

7. The mineral fibres according to claim 1, in which the molar ratio of [SiO₂ + Al₂O₃] to [CaO + MgO] is between 1.02 and 1.27.

8. The mineral fibres according to claim 1, in which the molar ratio of [SiO₂] to [CaO + MgO] is between 0.76 and 0.93.

9. The mineral fibres according to claim 1, in which the molar ratio of [Al₂O₃] to [CaO + MgO] is between 0.26 and 0.32.

10. The mineral fibres according to claim 1, in which the molar ratio of [SiO₂ + Al₂O₃] to [CaO] is between 1.66 and 1.98.

11. The mineral fibres according to claim 1, in which the molar ratio of [SiO₂ + Al₂O₃] to [MgO] is between 2.68 and 3.52.

12. The mineral fibres according to 1 whose composition comprises
1 to 5 mole % Na₂O + K₂O
1 to 5 mole % FeO + Fe₂O₃
1 to 2 mole % TiO₂.

13. The mineral fibres according to claim 1 with a specific surface area of < 0.25 m²/g.

14. The mineral fibres according to claim 1 with an average diameter of d₉₅ > 6 µm.

15. The mineral fibres according to claim 1 with an average diameter of d₉₅ > 8 µm.

## Revendications

1. Fibres minérales fabriquées à partir d'une composition comportant à plus de 80 % molaire les oxydes SiO₂, Al₂O₃, CaO et MgO, avec les rapports molaires suivants :
a) [SiO₂ + Al₂O₃] par rapport à [CaO + MgO], entre 0,75 et 1,68,
b) [SiO₂] par rapport à [CaO + MgO], entre 0,54 et 1,23,
c) [Al₂O₃] par rapport à [CaO + MgO], entre 0,21 et 0,45,
d) [SiO₂ + Al₂O₃] par rapport à [CaO], entre 1,23 et 2,54 et
e) [SiO₂ + Al₂O₃] par rapport à [MgO], entre 1,96 et 4,94

2. Fibres minérales selon la revendication 1, pour lesquelles la proportion molaire [SiO₂ + Al₂O₃] par rapport à [CaO + MgO] se situe entre 0,96 et 1,47.

3. Fibres minérales selon la revendication 1, pour lesquelles la proportion molaire [SiO₂] par rapport à [CaO + MgO] se situe entre 0,72 et 1,10.

4. Fibres minérales selon la revendication 1, pour lesquelles la proportion molaire [Al₂O₃] par rapport à [CaO + MgO] se situe entre 0,23 et 0,37.

5. Fibres minérales selon la revendication 1, pour lesquelles la proportion molaire [SiO₂ + Al₂O₃] par rapport à [CaO] se situe entre 1,59 et 2,23.

6. Fibres minérales selon la revendication 1, pour lesquelles la proportion molaire [SiO₂ + Al₂O₃] par rapport à [MgO] se situe entre 2,43 et 4,35.

7. Fibres minérales selon la revendication 1, pour lesquelles la proportion molaire [SiO₂ + Al₂O₃] par rapport à [CaO + MgO] se situe entre 1,02 et 1,27.

8. Fibres minérales selon la revendication 1, pour lesquelles la proportion molaire [SiO₂] par rapport à [CaO + MgO] se situe entre 0,76 et 0,93.

9. Fibres minérales selon la revendication 1, pour lesquelles la proportion molaire [Al₂O₃] par rapport à [CaO + MgO] se situe entre 0,26 et 0,32.

10. Fibres minérales selon la revendication 1, pour lesquelles la proportion molaire [SiO₂ + Al₂O₃] par rapport à [CaO] se situe entre 1,66 et 1,98.

11. Fibres minérales selon la revendication 1, pour lesquelles la proportion molaire [SiO₂ + Al₂O₃] par rapport à [MgO] se situe entre 2,68 et 3,52.

12. Fibres minérales selon la revendication 1, dont la composition comprend
1 à 5 % molaire Na₂O + K₂O,
1 à 5 % molaire FeO + Fe₂O₃,
1 à 2 % molaire TiO₂.

13. Fibres minérales selon la revendication 1 présentant une surface spécifique < 0,25 m²/g.

14. Fibres minérales selon la revendication 1 présentant un diamètre moyen d₉₅ > 6 µm.

15. Fibres minérales selon la revendication 1 présentant un diamètre moyen de d₉₅ > 8 µm.
